# EUROPEAN PATENT SPECIFICATION

(11) **EP 2 495 943 B1**
(45) Date of publication and mention of the grant of the patent: **23.04.2014**
(21) Application number: 11157106.3
(22) Date of filing: 04.03.2011
(51) Int. Cl.: H04M 1/02

(54) **Slidable and rotatable portable electronic device for aligning the surfaces of the keypad and display portions**
Verschiebbare und drehbare tragbare elektronische Vorrichtung zur Ausrichtung der Oberflächen der Tastatur- und Anzeigeteile
Dispositif électronique portable coulissant et rotatif pour aligner les surfaces d'un clavier et des parties d'écran

(43) Date of publication of application: 05.09.2012
(73) Proprietor: BlackBerry Limited, Waterloo, ON N2K 0A7 (CA)
(72) Inventor: Pegg, Albert, Waterloo Ontario N2L 3L3 (CA)
(74) Representative: Moore, Barry

(56) References cited:
- EP-A1- 2 031 839
- EP-A1- 2 120 425
- US-A1- 2009 075 702
- US-A1- 2010 273 531

## Description

Embodiments herein relate generally to portable electronic devices, and more particularly to slidable and rotatable portable electronic devices having a display portion and keypad portion movable between a closed position and an open position.

Electronic devices, including portable electronic devices, have gained widespread use and may provide a variety of functions including, for example, telephonic, electronic text messaging and other personal information manager (PIM) application functions. Portable electronic devices can include mobile stations such as simple cellular phones, smart phones, Personal Digital Assistants (PDAs), tablets and laptop computers.

Some handheld devices are touch-sensitive devices having a display, such as a liquid crystal display (LCD), with a touch-sensitive overlay. These touch sensitive devices may be useful, as handheld devices tend to be small and therefore limited in space available for user input and output devices. Further, these touch-sensitive devices allow a variety of input and output configurations, for example, because the screen content on the touch-sensitive devices may change depending on the functions and operations being performed.

US 2009/075702 describes an electronic device which includes at least two display casings each having a display therein, a connecting member comprising two rotation shafts arranged in parallel to each other and coupled to respective ones of the two display casings so as to allow each of the two display casings to rotate, and a sliding mechanism configured to allow the two display casings to move toward each other so as to allow the displays of the two display casings to form a single larger display area.

EP 2,120,425 relates to a portable terminal which has an upper body including an upper surface and a lower surface, a lower body having an upper surface. The upper body is slidably connected to the lower body for movement between a closed position and an open position to expose a portion of the upper surface of the lower body.

EP 2,031,839 describes a portable information terminal which has a first casing with operating buttons primarily mounted thereupon, and a second casing with primarily an output screen exposed. A sliding supporting member and casing turning supporting member are provided which realize a state wherein the first casing and second casing are overlapped, a state of mutually sliding, and a state wherein the first casing and second casing are turned to do away with any mutually overlapped portions.

US 2010/273531 describes an electronic device which includes a first housing, a second housing and an aberration compensating chip. The first housing has a first display screen, and the second housing connected to the first housing has a second display screen, wherein the first display screen can be joined with the second display screen and a seam located at the joining place between the first display screen and the second display screen is formed. The aberration compensating chip disposed in the first housing or in the second housing is electrically connected to the first display screen and the second display screen. When the second housing moves relative to the first housing so as to simultaneously expose the first display screen and the second display screen for displaying images, the aberration compensating chip makes the seam trace between the first display screen and the second display screen invisible so as to display a complete image.

### GENERAL

Described herein are various portable electronic devices that may include a touch-sensitive display disposed on a first portion, a keypad disposed on a second portion, a third portion that couples the first and second portions together, and functional components such as a memory and a processor.

It will be appreciated that for simplicity and clarity of illustration, where considered appropriate, reference numerals may be repeated among the figures to indicate corresponding or analogous elements. In addition, numerous specific details are set forth in order to provide a thorough understanding of the example embodiments described herein. However, it will be understood by those of ordinary skill in the art that the example embodiments described herein may be practiced without these specific details. In other instances, well-known methods, procedures and components have not been described in detail so as not to obscure the example embodiments described herein. Also, the description is not to be considered as limited to the scope of the example embodiments described herein.

According to one aspect, there may be provided a portable electronic device, comprising a first portion having a first surface, a second portion having a second surface, and a slide portion coupled to the first and second portions, wherein the first portion, second portion and slide portion are adapted so that the first portion can rotate between a closed position wherein the first portion at least partially covers the second surface, and a rotated position wherein the second surface is at least partially exposed and the display portion is angularly offset by a rotation angle with respect to the keypad portion, and wherein, after being rotated into the rotated position, the first portion and slide portion can slide relative to the second portion along a slide direction to an open position in which the first surface and second surface are aligned.

According to another aspect, there may be provided a method of opening a portable electronic device, comprising providing a first portion having a first surface, a second portion having a second surface, and a slide portion coupled to the first and second portions, rotating the first portion between a closed position wherein the first portion at least partially covers the second surface, and a rotated position wherein the second surface is at least partially exposed and the display portion is angularly offset by a rotation angle with respect to the keypad portion, and from the rotated position, sliding the first portion and slide portion relative to the second portion along a slide direction to an open position in which the first surface and second surface are aligned.

### BRIEF DESCRIPTION OF THE DRAWINGS

Embodiments of the present disclosure will now be described, by way of example only, with reference to the attached figures, wherein:

Figure 1 is a simplified block diagram of components of a portable electronic device;

Figure 2 is a front view of a portable electronic device according to one embodiment shown in a closed position;

Figure 3 is a front view of the portable electronic device of Figure 2 shown in an open position;

Figure 4 is a side view of the portable electronic device of Figure 2 shown in the closed position;

Figure 5 is a side view of the portable electronic device of Figure 2 shown in the open position;

Figure 6 is a top view of the portable electronic device of Figure 2 shown in the closed position; and

Figure 7 is a top view of the portable electronic device of Figure 2 shown in the open position.

### DETAILED DESCRIPTION

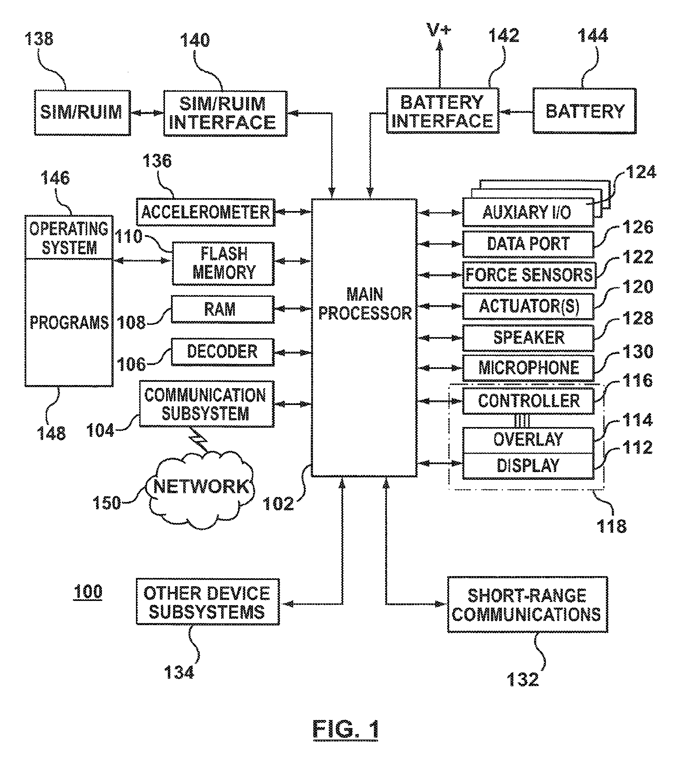

Figure 1 shows a simplified block diagram of components of a portable electronic device 100. The portable electronic device 100 includes multiple components such as a processor 102 that controls the operations of the portable electronic device 100. Communication functions, including data communications, voice communications, or both may be performed through a communication subsystem 104. Data received by the portable electronic device 100 may be decompressed and decrypted by a decoder 106. The communication subsystem 104 may receive messages from and send messages to a wireless network 150.

The wireless network 150 may be any type of wireless network, including, but not limited to, data-centric wireless networks, voice-centric wireless networks, and dual-mode networks that support both voice and data communications.

The portable electronic device 100 may be a battery-powered device and may include a battery interface 142 as shown for receiving one or more rechargeable batteries 144.

The processor 102 also interacts with additional subsystems such as a Random Access Memory (RAM) 108, a flash memory 110, a display 112 (e.g. with a touch-sensitive overlay 114 connected to an electronic controller 116 that together comprise a touch-sensitive display 118), an actuator assembly 120, one or more optional force sensors 122, an auxiliary input/output (I/O) subsystem 124, a data port 126, a speaker 128, a microphone 130, short-range communications systems 132 and other device subsystems 134.

In some embodiments, user-interaction with the graphical user interface may be performed through the touch-sensitive overlay 114. The processor 102 may interact with the touch-sensitive overlay 114 via the electronic controller 116. Information, such as text, characters, symbols, images, icons, and other items that may be displayed or rendered on a portable electronic device may be displayed on the touch-sensitive display 118 via the processor 102.

The processor 102 may also interact with an accelerometer 136 as shown in Figure 1. The accelerometer 136 may be utilized for detecting direction of gravitational forces or gravity-induced reaction forces.

To identify a subscriber for network access according to the present embodiment, the portable electronic device 100 may use a Subscriber Identity Module or a Removable User Identity Module (SIM/RUIM) card 138 inserted into a SIM/RUIM interface 140 for communication with a network (such as the wireless network 150). Alternatively, user identification information may be programmed into the flash memory 110 or performed using other techniques.

The portable electronic device 100 also includes an operating system 146 and software components 148 that are executed by the processor 102 and which may be stored in a persistent data storage device such as the flash memory 110. Additional applications may be loaded onto the portable electronic device 100 through the wireless network 150, the auxiliary I/O subsystem 124, the data port 126, the short-range communications subsystem 132, or any other suitable device subsystem 134.

In use, a received signal such as a text message, an e-mail message, web page download, or other data may be processed by the communication subsystem 104 and provided to the processor 102. The processor 102 then processes the received signal for output to the display 112 or alternatively to the auxiliary I/O subsystem 124. A subscriber may also compose data items, such as e-mail messages, for example, which may be transmitted over the wireless network 150 through the communication subsystem 104.

For voice communications, the overall operation of the portable electronic device 100 may be similar. The speaker 128 may output audible information converted from electrical signals, and the microphone 130 may convert audible information into electrical signals for processing and transmittal.

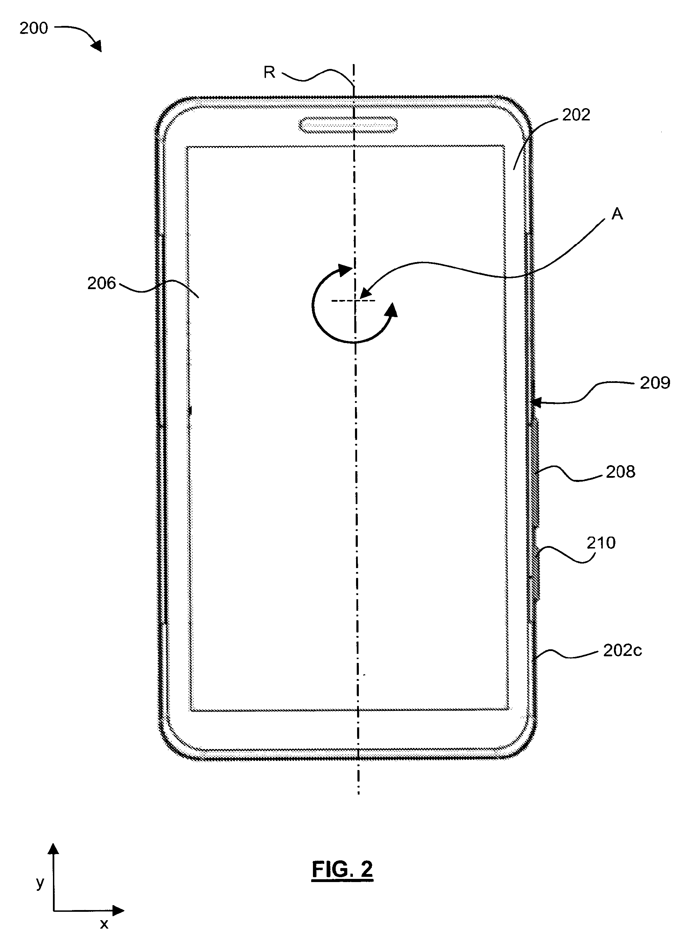

Turning now to Figures 2 to 7, illustrated therein is a portable electronic device 200 according to one embodiment. The portable electronic device 200 is a slidable and rotatable device and generally includes a first portion (shown here as a display portion 202), a second portion (shown here as a keypad portion 204), and a third portion (shown here as a slide portion 205) that is coupled to both the display portion 202 and keypad portion 204.

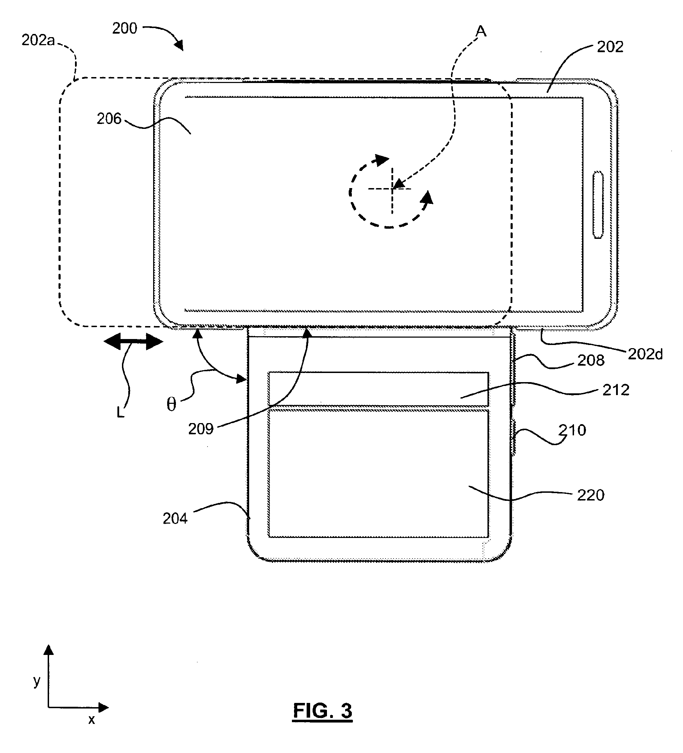

Generally the display portion 202, keypad portion 204, and slide portion 205 are sized and shaped so that the display portion 202 can move between a "closed position" (as shown in Figures 2, 4 and 6) and an "open position" (as shown in Figures 3, 5 and 7).

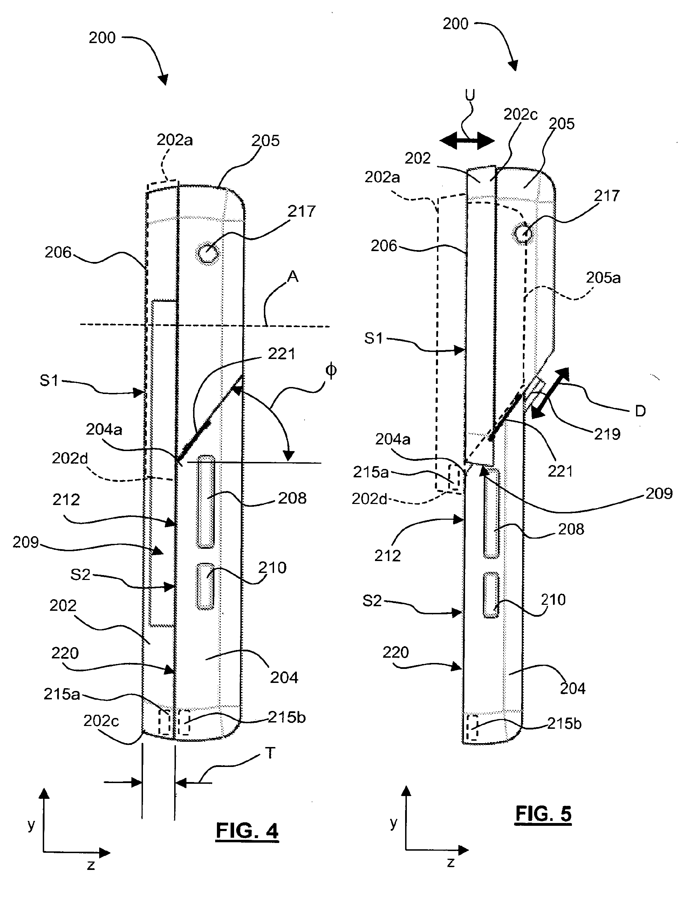

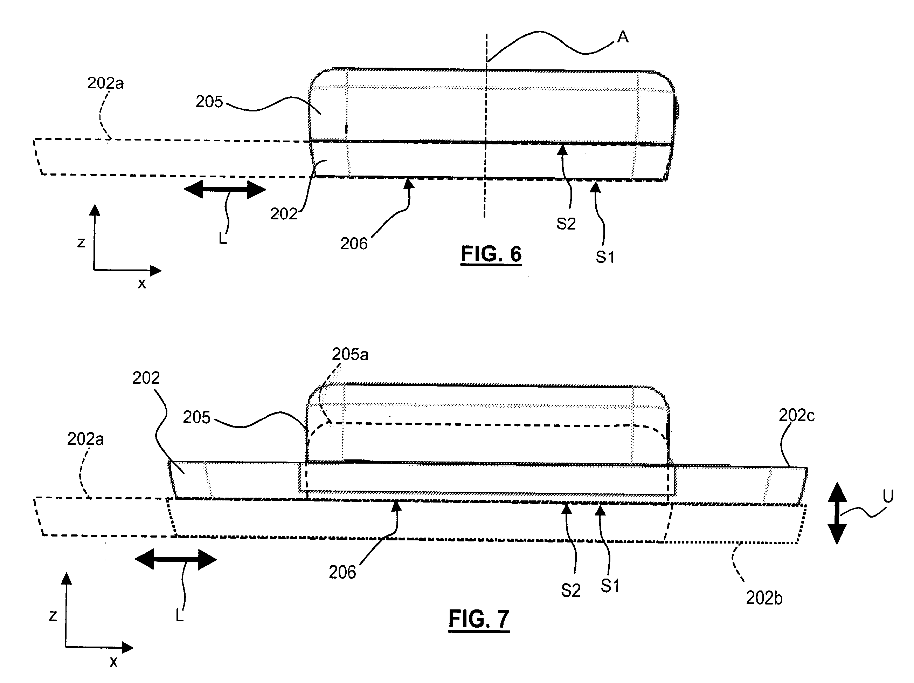

In the closed position, the display portion 202 covers at least a portion of the keypad portion 204 (e.g. the display portion 202 covers a surface S2 of the keypad portion 204 as shown in Figures 4 and 6). Furthermore, in the closed position, the display portion 202 is aligned with a longitudinal axis R of the portable electronic device 200.

In the open position, the surface S2 of the keypad portion 204 is exposed, and a surface S1 of the display portion 202 is aligned with the surface S2 of the keypad portion 204 (as shown in Figures 5 and 7) and the first surface S1 and second surface S2 are offset from each other or misaligned. Furthermore, in the open position, the display portion 202 is rotated about a rotational axis A so that the display portion 202 is angularly offset from keypad portion 204, and the first surface S1 and second surface S2 are still offset. For example, in the open position, the display portion 202 may be perpendicular to the longitudinal axis R (as shown in Figures 3, 5 and 7).

In particular, the slide portion 205 and display portion 202 are rotatably coupled so that the display portion 202 may be rotated from the closed position (shown in Figure 2) to a "rotated position" (indicated generally as 202a in Figure 3) wherein the keypad portion 204 is at least partially exposed.

Furthermore, the slide portion 205 and display portion 202 are slidably coupled so that, once in the rotated position 202a, the display portion 202 can slide along a first slide direction L (e.g. perpendicular to longitudinal axis R of the device 200) to a "slide position" (indicated generally as 202b in Figure 7, and with the corresponding position of the slide portion 205 indicated generally as 205a). For example, in the slide position 202b, the display portion 202 is generally centered above the keypad portion 204.

Furthermore, the slide portion 205 is slidably coupled to the keypad portion 204 so that when the display portion 202 is in the slide position 202b, the display portion 202 and slide portion 205 can slide in a second slide direction D to the open position (indicated generally as 202c in Figure 7) so that the surface S1 of the display portion 202 and the surface S2 of the keypad portion 204 can be aligned (as shown in Figure 5). In effect, the display portion 202 may be "dropped down" from the slide position 202a (e.g. along the z-direction) so that the two surfaces S1 and S2 align or are generally coplanar.

Referring now to Figures 2 and 3, the display portion 202 and slide portion 205 are rotatably coupled so that the display portion 202 rotates about the rotation axis A with respect to the keypad portion 202 by a rotation angle θ when moving from the closed position to the rotated position 202a.

In this embodiment, the rotation angle θ is selected so that the display portion 202 is generally aligned with the longitudinal axis R in the closed position (shown in Figure 2), and then the display portion 202 is generally perpendicular to the longitudinal axis R in the rotated position 202a (shown in Figure 3). In particular, in this embodiment the rotation angle θ is about 90 degrees.

In other embodiments, the display portion 202 may be rotatably coupled to the slide portion 205 in other ways. In particular, the rotation axis A may have other locations and the rotation angle θ may be another angle. For example, the rotation angle θ may be larger or smaller than 90 degrees.

Referring now to Figures 4 and 5, the second slide direction D has a component that extends in a direction that is normal to the surface S1 of the display portion 202 (e.g. in a normal direction U generally along the z-axis). As shown, the slide direction D may be angularly offset upwards from the normal direction U by a slide angle φ (as shown in Figure 4), which in some embodiments may be greater than zero.

Accordingly, as the display portion 202 and slide portion 205 move in the second slide direction D, the display portion 202 and slide portion 205 will move along both the normal direction U (e.g. the z-axis) by an amount proportional to the cosine of the slide angle φ, and along a direction aligned with the longitudinal axis R (e.g. the y-axis) by an amount proportional to the sine of the slide angle φ. Generally, the second slide direction D can be described as having a component aligned with the longitudinal axis R (e.g. the y-component) and another component in the normal direction U (e.g. the z-component).

Selecting a slide angle φ greater than zero may allow for easier mechanical coupling between the display portion 202, the keypad portion 204, and the slide portion 205. Furthermore, when the slide angle φ is greater than zero, an upward force on the display portion 202 (e.g. a user's thumb or finger pushing on the display portion 202 towards a top end of the device 200) when the display portion 202 is in the slide position 202b will tend to push the display portion 202 in the second slide direction D. This may make it easier for a user to fully open the portable electronic device 200.

In some embodiments, the slide angle φ may be between 15 degrees and 75 degrees. In some embodiments, the slide angle φ may be between 30 degrees and 60 degrees. In some embodiments, the slide angle φ may be approximately 45 degrees.

In other embodiments, the slide angle φ may be less than zero (e.g. the slide angle φ may be negative).

As shown in Figure 4, the display portion 202 has a thickness T. Accordingly, when moving the display portion 202 from the slide position 202b to the open position 202c (e.g. to align the first and second surfaces S1 and S2), the slide portion 205 moves along the normal direction U by a distance approximately equal to T. This means that the slide portion 205 should be moved in the second slide direction D by distance equal to the distance T divided by the cosine of the slide angle φ.

The display portion 202, keypad portion 204 and slide portion 205 may be coupled together according to various techniques. For example, the keypad portion 202 and slide portion 205 may be rotatably coupled together so as to rotate about the rotation axis A. The position of rotation axis A is generally offset from the display portion 202 by a distance selected so that when the display portion 202 is in the rotated position 202a, the surface S2 of the keypad portion 204 is exposed and the display portion 202 can be moved with the slide portion 205 in the slide direction D.

In some embodiments, the display portion 202 can be moved from the rotated position 202a in the first slide direction L into the slide position 202b. Once in the slide position 202b, the display portion 202 and slide portion 205 can then be slid along the second slide direction D (with at least a component aligned in the normal direction R) into the open position 202c (as shown for example in Figure 7).

In other embodiments the display portion 202 can be moved directly from the rotated position 202a to the open position 202c wherein the surfaces S1 and S2 are aligned (and generally without the display portion 202 sliding in the first slide direction L into the slide position 202b). For example, in some embodiments, the display portion may move directly from the rotated position 202a along the second slide direction D to the open position, in which case the display portion 202 may not be centered above the keypad portion 204 in the open position.

In other embodiments, the rotation axis A may be selected so that the display portion 202 is centered above the keypad portion 204 when the display portion 202 is in the rotated position. More particularly, the rotation axis A may be offset to the left or right of the longitudinal axis R (as viewed in Figures 2 and 3) by a lateral offset distance. The lateral offset distance may be selected so that rotating the display portion 202 from the closed position to the rotated position 202a results in the display portion 202 being centered above the keypad portion 204 in the rotated position.

The slide portion 205 and keypad portion 204 may be slidably coupled together via a slide mechanism 219, which may include interlocking slide rails for example. The slide mechanism 219 allows for relative movement between the slide portion 205 and the keypad portion 204 along the slide direction D so that the surfaces S1 and S2 of the display portion and keypad portion 204 can be aligned, but inhibits movement in other directions. In this embodiment, the slide mechanism 219 is inclined upwardly (from front to back of the device 200) so as to define the slide angle φ.

In some embodiments, the slide mechanism 219 may have other configurations, for example, a tongue in groove arrangement that allows sliding movement between the keyboard portion 204 and the slide portion 205.

Similarly, the slide portion 205 and display portion 202 may be slidably coupled together by a slide mechanism, which could include interlocking rails for example.

In some embodiments, the slide mechanisms may include one or more biasing members (e.g. a linear spring, such as a compression or extension spring, or another biasing member). Furthermore, a biasing member (e.g. a coiled spring) may be provided between the display portion 202 and the slide portion 205 to facilitate rotation between the closed position and the rotated position.

The biasing members may be used to encourage at least one of the slide portion 205 and display portion 202 to move between one or more of the open position, the rotated position, the slide position, and the closed position. For example, a linear spring 221 in the slide mechanism 219 may be compressed when the portable electronic device 200 is in the closed position (see Figure 4) and extended when the portable electronic device 200 is in the open position (see Figure 5). Similarly, a coiled spring may be configured to encourage rotation of the display portion 202 from the closed position to the rotated position.

In some embodiments, one or more locks or latches (e.g. mechanical locks, magnets, etc.) may be provided in one or more of the display portion 202, keypad portion 204 and slide portion 205 to help retain the portable electronic device in one or more of the closed position, the rotated position and the open position. For example, as shown in Figures 4 and 5, magnets 215a, 215b in the display portion 202 and the keypad portion 204 (respectively) may attract each other and help retain the device 200 in the closed position, but may not substantially interact with each other when the device 200 is in the open position.

When moving the display portion 202 from the closed position (shown in Figure 2) to the open position 202c, a user may first rotate the display portion 202 around the rotation axis A so that the display portion 202 is in the rotated position 202a. In some embodiments, this movement may be facilitated by a biasing member (e.g. a spring). From the rotated position 202a, the display portion 202 can then slide along the first slide direction L to the slide position 202b. The display portion 202 can then be moved in the second slide direction D into the open position 202c wherein the surfaces S1 and S2 are aligned.

In some embodiments, the user may push upwardly on the display portion 202 (when in the slide position 202b) so as to slide the display portion 202 and the slide portion 205 in the second slide direction D. In some embodiments, a biasing member (e.g. a spring) may at least partially bias the slide portion 205 along the second slide direction D to the open position 202c. Once in the open position 202c, in some embodiments a locking mechanism (e.g. a latch or magnet) may help retain the portable electronic device 200 in the open position.

In some embodiments, a side edge 202d of the display portion 202 may include a recessed portion 209 (as shown in Figure 2) adapted to facilitate clearance of the display portion 202 past the corner 204a of the keypad portion 204 when the device 200 is in the slide position 202b.

When the user wants to move the portable electronic device 200 back to the closed position (e.g. to close the portable electronic device 200), the user may press the back of the slide portion 205, moving the display portion 202 and slide portion 205 back along the second slide direction D back to the slide position 202b, then slide the display portion 202 back along the first slide direction L to the rotated position 202a, and then rotate the display portion 202 about the rotation axis A to cover the keypad portion 204 (in the closed position). In some embodiments, one or more biasing members (e.g. springs) may help facilitate closing of the portable electronic device 200, and one or more locks may be used to help retain the portable electronic device 200 in the closed position.

In some embodiments, the first and second surfaces S1 and S2 are "active" surfaces in that they may include one or more input or output devices (or both), such as display screens, buttons, etc. For example, the first surface S1 might include the surface of a touch screen display 206. Similarly, the second surface S2 might include the surface of a keypad 220, other input devices 212 or another portion of the keypad portion 204.

Aligning the "active" surfaces S1 and S2 when the portable electronic device 200 is in the open position may be beneficial. For example, user interaction with the portable electronic device 200 may be improved as a user may be able to transition from engaging the first surface S1 (e.g. touching the touch screen display 206 using a finger), to engaging the second surface S2 (e.g. the input devices 212 or keypad 220) generally without encountering discontinuities, such as a lip or stepped portion between the surfaces.

While the portable electronic device 200 has been described with respect to a touch screen display 206 and a keypad 220, the portable electronic device 200 may include other input and output devices, and may have other configurations as will be appreciated from the following description of some other exemplary input and output devices.

In some embodiments, the display 206 could be an LCD display with touch screen capabilities. For example, the display 206 could be the display 118 as generally described above. In some other embodiments, the display 206 may not be a touch screen display.

The portable electronic device 200 may include other input devices, such as navigation keys or buttons, a physical or virtual keyboard, a trackpad, a trackball, multimedia keys, etc. For example, in this embodiment, the keypad portion 204 includes one or more input devices 212, which could include an optical navigation module (e.g. a trackpad), buttons, such as a phone application button, a home screen button, etc. In some embodiments, these input devices may include optical sensors, mechanical buttons, "soft keys", or various combinations thereof.

In some embodiments, the keypad portion 204 includes physical buttons 208 and 210 on a side of the keypad portion 204. In some embodiments, buttons 208, 210 could be used for navigation, volume control, or for other purposes. The portable electronic device 200 as shown also includes an audio jack 217 on the side of the slide portion 205, which may be used to couple the portable electronic device 200 to a speaker, a microphone, etc. In some embodiments, the slide portion may include other input and output devices.

In some embodiments, the keypad 220 may include a plurality of alphanumeric keys for inputting data into and otherwise controlling the portable electronic device 200. In some embodiments, the keys may represent an alphabet and may be arranged with a standard keyboard layout (e.g. QWERTY, QWERTZ, DVORAK, etc.) or according to other particular patterns. In some embodiments, the keypad 220 could be a physical keypad 220 with mechanical keys. In other embodiments, the keypad 220 could be a touchscreen with soft keys.

As shown in Figures 3 and 5, when the portable electronic device 200 is in the open position, the keypad 220 on the keypad portion 204 may be exposed for user access. As shown in Figures 2 and 4, when the portable electronic device 200 is in the closed position, the keypad 220 may be covered by the display portion 202. This may be beneficial as it may protect the keypad 220 when not in use, and may also inhibit keys from being pressed unintentionally when a user is carrying the portable electronic device 200 (e.g. in a pocket).

In some embodiments (e.g. when the display 206 is a touchsceen), the user may be able to perform functions on the portable electronic device 200 when the device 200 is in the closed position, for example, by interacting with the accessible input devices (e.g. buttons 208, 210, the touch screen display 206, etc.). Then, when the device 200 is in the open position, functions can be performed using additional input devices, such as the input devices 212 and keypad 220.

While reference has been made herein to portable electronic devices wherein a first portion is a display portion, a second portion is a keypad portion, and a third portion is a slide portion, this is not meant to be limiting and other configurations are possible. For example, the first portion and second portion may both be touchscreen portions with no keypad. In other examples, the first portion may have a keypad and the second portion may include a display.

Furthermore, while in some embodiments described herein the display portion 202 is rotated into the rotated position 202a before sliding into the slide position 202b, in other embodiments, the display portion 202 may slide relative to the slide portion 205 before being rotated about the rotation axis A.

Furthermore, in some embodiments as described herein, the display portion 202 is generally centered above the keypad portion 204 in the slide position 202b and the open position 202c, meaning that the midline of the display portion 202 is aligned with the midline of the keypad portion 204. This may provide for a desired user interface, for instance as the display 206 may be centered above the keypad 220 which may make reading text on the display 206 easier.

In other embodiments, the midlines of the display portion 202 and keypad portion 204 may be offset when the display portion 202 is in the slide position 202b and the open position 202c. In particular, in some embodiments the display portion 202 can be moved directly from the rotated position 202a to an open position 202c wherein the surfaces S1 and S2 are aligned (and generally without the display portion 202 sliding in the first slide direction L).

Furthermore, in some other embodiments, the display portion 202 may be slid in the first slide direction L after being slid in the second slide direction D. For example, the display portion 202 may be rotated by the rotation angle θ, then moved along the second slide direction D (e.g. so that the surfaces S1 and S2 are aligned), and then moved along the first slide direction L (e.g. to align the midlines of the display portion 202 and the keypad portion 204).

While the above description provides examples of one or more processes or apparatuses, it will be appreciated that other processes or apparatuses may be within the scope of the accompanying claims.

## Claims

1. A portable electronic device (200), comprising:
a first portion (202) having a first surface (S1);
a second portion (204) having a second surface (S2); and
a slide portion (205) coupled to the first and second portions (202, 204);
wherein the first portion (202), second portion (204) and slide portion (205) are adapted so that the first portion (202) is rotatable about an axis of rotation (A) between a closed position wherein the first portion (202) is adapted to at least partially cover the second surface (S2), and a rotated position (202a) wherein the second surface (S2) is at least partially exposed and the first portion (202) is angularly offset by a rotation angle (θ) with respect to the second portion (204), and
wherein, after being rotated into the rotated position (202a), the first portion (202) and slide portion (205) are adapted to slide relative to the second portion (204) along a second slide direction (D) having a component normal to the first surface (S1) to an open position (202c) in which the first surface (S1) and second surface (S2) are aligned.

2. The portable electronic device (200) of claim 1, wherein, when the first portion (202) is in the rotated position (202a), the first portion (202) is adapted to slide relative to the slide portion (205) along a first slide direction (L) to a slide position (202b).

3. The portable electronic device (200) of claim 1 or claim 2, wherein the first portion (200) is slidable into a slide position (202b) before being slid to the open position (202c).

4. The portable electronic device (200) of claim 2 or claim 3, wherein when the first portion (202) is in the slide position (202b), the first portion (202) is centered above the second portion (204).

5. The portable electronic device (200) of any one of claim 2 or claim 3, wherein the first slide direction (L) is transverse to a longitudinal axis (R) of the portable electronic device (200).

6. The portable electronic device (200) of any preceding claim, wherein the rotation angle (θ) is 90 degrees.

7. The portable electronic device (200) of any preceding claim, wherein the first portion (202) is a display portion and comprises a display (206).

8. The portable electronic device (200) of any preceding claim, wherein the second portion (204) is a keypad portion and comprises a keypad (220).

9. The portable electronic device (200) of any preceding claim, wherein the second slide direction (D) has a component aligned with a longitudinal axis (R) of the portable electronic device (200).

10. The portable electronic device (200) of any preceding claim wherein the second slide direction (D) is inclined with respect to the axis of rotation (A) of the first portion by a slide angle (φ).

11. The portable electronic device (200) of claim 10, wherein the second portion (204) and slide portion (205) are slidably coupled together using a slide mechanism (219) inclined along the slide angle (φ).

12. The portable electronic device (200) of any preceding claim, further comprising at least one biasing member (221) for biasing the portable electronic device (200) to at least one of the closed position, the rotated position (202a), and the open position (202c).

13. The portable electronic device (200) of any preceding claim, further comprising at least one locking member (215a, 215b) for retaining the portable electronic device (200) in at least one of the closed position, the rotated position (202a), and the open position (202c).

14. The portable electronic device (200) of any preceding claim wherein a side edge (202d) of the first portion (202) includes a recessed portion (209) adapted to facilitate movement of the first portion (202) in the second slide direction (D).

15. A method of opening a portable electronic device (200), comprising:
providing a first portion (202) having a first surface (S1), a second portion (204) having a second surface (S2), and a slide portion (205) coupled to the first and second portions (202, 204);
rotating the first portion (202) about an axis of rotation (A) between a closed position wherein the first portion (202) at least partially covers the second surface (S2), and a rotated position (202a) wherein the second surface (S2) is at least partially exposed and the first portion (202) is angularly offset by a rotation angle (θ) with respect to the second portion (204); and
when in the rotated position (202a), sliding the first portion (202) and slide portion (205) relative to the second portion (204) along a slide direction (D) having a component normal to the first surface (S1) to an open position (202c) in which the first surface (S1) and second surface (S2) are aligned.

## Patentansprüche

1. Tragbare Elektronikvorrichtung (200) mit:
einem ersten Teil (202), der eine erste Oberfläche (S1) aufweist,
einem zweiten Teil (204), der eine zweite Oberfläche (S2) aufweist, und
einem Schiebeteil (205), der mit dem ersten und dem zweiten Teil (202, 204) gekoppelt ist,
wobei der erste Teil (202), der zweite Teil (204) und der Schiebeteil (205) so ausgelegt sind, dass der erste Teil (202) um eine Drehachse (A) zwischen einer geschlossenen Stellung, in welcher der erste Teil (202) dazu ausgelegt ist, die zweite Oberfläche (S₂) zumindest teilweise zu überdecken, und einer gedrehten Stellung (202a) drehbar ist, in der die zweite Oberfläche (S2) zumindest teilweise freigelegt ist und der erste Teil (202) in Bezug auf den zweiten Teil (204) durch einen Drehwinkel (θ) winklig versetzt ist, und
wobei nach dem Drehen in die gedrehte Stellung (202a) der erste Teil (202) und der Schiebeteil (205) dazu ausgelegt sind, in Bezug auf den zweiten Teil (204) entlang einer zweiten Gleitrichtung (D), die eine Komponente senkrecht zu der ersten Oberfläche (S1) aufweist, in eine offene Stellung (202C) zu gleiten, in der die erste Oberfläche (S1) und die zweite Oberfläche (S2) fluchten.

2. Tragbare Elektronikvorrichtung (200) nach Anspruch 1, wobei, wenn der erste Teil (202) in der gedrehten Stellung (202a) ist, der erste Teil (202) dazu ausgelegt ist, in Bezug auf den Schiebeteil (205) entlang einer ersten Gleitrichtung (L) in eine Gleitstellung (202b) zu gleiten.

3. Tragbare Elektronikvorrichtung (200) nach Anspruch 1 oder 2, wobei der erste Teil (200) in eine Gleitstellung (202b) gleiten kann, bevor er in die offene Stellung (202C) geschoben wird.

4. Tragbare Elektronikvorrichtung (200) nach Anspruch 2 oder 3, wobei, wenn der erste Teil (202) in der Gleitstellung (202b) ist, der erste Teil (202) über dem zweiten Teil (204) zentriert ist.

5. Tragbare Elektronikvorrichtung (200) nach Anspruch 2 oder 3, wobei die erste Gleitrichtung (L) zu einer Längsachse (R) dertragbaren Elektronikvorrichtung (200) quer liegt.

6. Tragbare Elektronikvorrichtung (200) nach einem der vorhergehenden Ansprüche, wobei der Drehwinkel (θ) 90° beträgt.

7. Tragbare Elektronikvorrichtung (200) nach einem der vorhergehenden Ansprüche, wobei der erste Teil (202) ein Anzeigeteil ist und eine Anzeige (206) aufweist.

8. Tragbare Elektronikvorrichtung (200) nach einem der vorhergehenden Ansprüche, wobei der zweite Teil (204) ein Tastaturteil ist und eine Tastatur (220) aufweist.

9. Tragbare Elektronikvorrichtung (200) nach einem der vorhergehenden Ansprüche, wobei die zweite Gleitrichtung (D) eine Komponente aufweist, die an einer Längsachse (R) dertragbaren Elektronikvorrichtung (200) ausgerichtet ist.

10. Tragbare Elektronikvorrichtung (200) nach einem der vorhergehenden Ansprüche, wobei die zweite Gleitrichtung (D) in Bezug auf die Drehachse (A) des ersten Teils um einen Gleitwinkel (φ) geneigt ist.

11. Tragbare Elektronikvorrichtung (200) nach Anspruch 10, wobei der zweite Teil (204) und der Schiebeteil (205) unter Verwendung eines entlang des Gleitwinkels (φ) geneigten Schiebemechanismus (219) verschiebbar miteinander gekoppelt sind.

12. Tragbare Elektronikvorrichtung (200) nach einem der vorhergehenden Ansprüche, ferner mit mindestens einem Vorspannelement (221) zum Vorspannen dertragbaren Elektronikvorrichtung (200) auf mindestens eine aus der geschlossenen Stellung, der gedrehten Stellung (202a) und der offenen Stellung (202C).

13. Tragbare Elektronikvorrichtung (200) nach einem der vorhergehenden Ansprüche, ferner mit mindestens einem Sperrelement (215a, 215b) zum Halten der tragbaren Elektronikvorrichtung (200) in mindestens einer aus der geschlossenen Stellung, der gedrehten Stellung (202a) und der offenen Stellung (202C).

14. Tragbare Elektronikvorrichtung (200) nach einem der vorhergehenden Ansprüche, wobei eine Seitenkante (202d) des ersten Teils (202) einen ausgesparten Teil (209) aufweist, der dazu ausgelegt ist, eine Bewegung des ersten Teils (202) in der zweiten Gleitrichtung (D) zu erleichtern.

15. Verfahren zum Öffnen einer tragbaren Elektronikvorrichtung (200) mit:
Bereitstellen eines ersten Teils (202), der eine erste Oberfläche (S1) aufweist, eines zweiten Teils (204), der eine zweite Oberfläche (S2) aufweist, und eines Schiebeteils (205), der mit dem ersten und dem zweiten Teil (202, 204) gekoppelt ist,
Drehen des ersten Teils (202) um eine Drehachse (A) zwischen einer geschlossenen Stellung, in welcher der erste Teil (202) die zweite Oberfläche (S2) zumindest teilweise überdeckt, und einer gedrehten Stellung (202a), in der die zweite Oberfläche (S2) zumindest teilweise freigelegt ist und der erste Teil (202) in Bezug auf den zweiten Teil (204) durch einen Drehwinkel (θ) winklig versetzt ist, und
wenn in der gedrehten Stellung (202a), Schieben des ersten Teils (202) und des Schiebeteils (205) in Bezug auf den zweiten Teil (204) entlang einer zweiten Gleitrichtung (D), die eine Komponente senkrecht zu der ersten Oberfläche (S1) aufweist, in eine offene Stellung (202c), in der die erste Oberfläche (S1) und die zweite Oberfläche (S2) fluchten.

## Revendications

1. Dispositif électronique portatif (200) comprenant :
une première partie (202) possédant une première surface (S1) ;
une seconde partie (204) possédant une seconde surface (S2) ; et
une partie coulissante (205) couplée aux première et seconde parties (202, 204) ;
dans lequel la première partie (202), la seconde partie (204) et la partie coulissante (205) sont conçues de manière à ce que la première partie (202) puisse tourner autour d'un axe de rotation (A) entre une position de fermeture dans laquelle la première partie (202) est conçue pour recouvrir au moins partiellement la seconde surface (S2) et une position de rotation (202a) dans laquelle la seconde surface (S2) est au moins partiellement exposée et la première partie (202) est décalée angulairement d'un angle de rotation (θ) par rapport à la seconde partie (204) ; et
dans lequel, après rotation vers la position de rotation (202a), la première partie (202) et la partie coulissante (205) sont conçues pour coulisser par rapport à la seconde partie (204) dans une seconde direction de coulissement (D) ayant une composante normale à la première surface (S1) vers une position d'ouverture (202c) dans laquelle la première surface (S1) et la seconde surface (S2) sont alignées.

2. Dispositif électronique portatif (200) selon la revendication 1, dans lequel, lorsque la première partie (202) est dans la position de rotation (202a), la première partie (202) est conçue pour coulisser par rapport à la partie coulissante (205) dans une première direction de coulissement (L) vers une position de coulissement (202b).

3. Dispositif électronique portatif (200) selon la revendication 1 ou la revendication 2, dans lequel la première partie (202) peut coulisser vers une position de coulissement (202b) avant de coulisser vers la position d'ouverture (202c).

4. Dispositif électronique portatif (200) selon la revendication 2 ou la revendication 3, dans lequel, lorsque la première partie (202) est dans la position de coulissement (202b), la première partie (202) est centrée au-dessus de la seconde partie (204).

5. Dispositif électronique portatif (200) selon l'une quelconque des revendications 2 et 3, dans lequel la première direction de coulissement (L) est perpendiculaire à un axe longitudinal (R) du dispositif électronique portatif (200).

6. Dispositif électronique portatif (200) selon l'une quelconque des revendications précédentes, dans lequel l'angle de rotation (θ) est de 90 degrés.

7. Dispositif électronique portatif (200) selon l'une quelconque des revendications précédentes, dans lequel la première partie (202) est une partie d'affichage et comprend un écran d'affichage (206).

8. Dispositif électronique portatif (200) selon l'une quelconque des revendications précédentes, dans lequel la seconde partie (204) est une partie de clavier et comprend un clavier (220).

9. Dispositif électronique portatif (200) selon l'une quelconque des revendications précédentes, dans lequel la seconde direction de coulissement (D) possède une composante alignée sur un axe longitudinal (R) du dispositif électronique portatif (200).

10. Dispositif électronique portatif (200) selon l'une quelconque des revendications précédentes, dans lequel la seconde direction de coulissement (D) est inclinée par rapport à l'axe de rotation (A) de la première partie d'un angle de coulissement (φ).

11. Dispositif électronique portatif (200) selon la revendication 10, dans lequel la seconde partie (204) et la partie coulissante (205) sont couplées l'une à l'autre de manière coulissante à l'aide d'un mécanisme de coulissement (219) incliné de l'angle de coulissement (φ).

12. Dispositif électronique portatif (200) selon l'une quelconque des revendications précédentes, comprenant en outre au moins un élément de précontrainte (221) destiné à précontraindre le dispositif électronique portatif (200) vers au moins une des positions parmi la position de fermeture, la position de rotation (202a) et la position d'ouverture (202c) .

13. Dispositif électronique portatif (200) selon l'une quelconque des revendications précédentes, comprenant en outre au moins un élément de verrouillage (215a, 215b) afin de retenir le dispositif électronique portatif (200) dans au moins une des positions parmi la position de fermeture, la position de rotation (202a) et la position d'ouverture (202c) .

14. Dispositif électronique portatif (200) selon l'une quelconque des revendications précédentes, dans lequel une arête latérale (202d) de la première partie (202) comprend une partie en retrait (209) conçue pour faciliter le mouvement de la première partie (202) dans la seconde direction de coulissement (D).

15. Procédé d'ouverture d'un dispositif électronique portatif (200) comprenant les étapes consistant à :
fournir une première partie (202) possédant une première surface (S1), une seconde partie (204) possédant une seconde surface (S2) et une partie coulissante (205) couplée aux première et seconde parties (202, 204) ;
faire tourner la première partie (202) autour d'un axe de rotation (A) entre une position de fermeture dans laquelle la première partie (202) recouvre au moins partiellement la seconde surface (S2) et une position de rotation (202a) dans laquelle la seconde surface (S2) est au moins partiellement exposée et la première partie (202) est décalée angulairement d'un angle de rotation (θ) par rapport à la seconde partie (204) ; et
dans la position de rotation (202a), faire coulisser la première partie (202) et la partie coulissante (205) par rapport à la seconde partie (204) dans une direction de coulissement (D) ayant une composante normale à la première surface (S1) vers une position d'ouverture (202c) dans laquelle la première surface (S1) et la seconde surface (S2) sont alignées.
